# FASCICULE DE BREVET EUROPEEN

(11) **EP 2 087 719 B1**
(45) Date de publication et mention de la délivrance du brevet: **07.03.2018**
(21) Numéro de dépôt: 07858678.1
(22) Date de dépôt: 08.11.2007
(51) Int. Cl.: H04M 3/533

(54) **PROCEDE ET SYSTEME DE TELECOMMUNICATION OFFRANT UNE PLURALITE DE MOYENS D'ACCES MUTUELLEMENT COHERENTS A UNE BASE DE MESSAGES**
VERFAHREN UND SYSTEM MIT MEHREREN KOORDINIERTEN ZUGRIFFSMÖGLICHKEITEN AUF NACHRICHTEN
TELECOMMUNICATION METHOD AND SYSTEM OFFERING A PLURALITY OF MUTUALLY CONSISTENT MEANS FOR ACCESS TO A MESSAGE BASE

(30) Priorité: 15.11.2006 FR 0654919
(43) Date de publication de la demande: 12.08.2009
(73) Titulaire: Orange, 75015 Paris (FR)
(72) Inventeur: ROUVIERE, Céline, F-69480 Pommiers (FR); CALVIAC, Julien, 75013 Paris (FR)
(74) Mandataire: Cabinet Plasseraud
(86) Numéro de dépôt international: PCT/FR2007/052317
(87) Numéro de publication internationale: WO 2008/059158

(56) Documents cités:
- WO-A1-2006/051232
- GB-A- 2 365 260
- US-B1- 6 697 458

## Description

La présente invention concerne un procédé et un système de télécommunication mettant en oeuvre une base de messages pour mémoriser des messages destinés à un utilisateur dudit système.

Un même utilisateur peut posséder plusieurs dispositifs de communication aptes à recevoir de tels messages, par exemple divers terminaux munis chacun d'un écran tels des ordinateurs personnels portables ou non, des téléphones mobiles ou des assistants numériques personnels, mais aussi d'autres terminaux dépourvus d'écrans mais aptes à restituer des messages sous forme seulement sonore ou sous toute autre forme non-textuelle. Ces différents terminaux seront alors le plus souvent individuellement reliés à la base de messages, soit directement soit par l'intermédiaire d'un ou de plusieurs réseaux de communication filaires ou non, et avoir ainsi individuellement accès à son contenu.

Ainsi, lorsqu'un tel utilisateur entreprendra au moyen de l'un de ses terminaux une action modifiant le contenu de sa base de messages ou le statut d'un ou plusieurs des messages qui y sont contenus, les autres terminaux que cet utilisateur possède ignoreront en principe l'occurrence de cet événement, et risquent donc d'offrir une vision obsolète du contenu de la base des messages.

Ainsi, si un message inclus dans la base est lu par l'utilisateur au moyen d'un premier de ses terminaux, seul ce terminal aura gardé trace de cette lecture, de sorte que les autres terminaux de cet utilisateur présenteront ledit message comme non-lu, attirant ainsi indûment l'attention de l'utilisateur qui consacrera un temps parfois précieux à une relecture au moins partielle dudit message avant qu'il puisse se rendre compte qu'il en connaît déjà la teneur.

Certains services de messagerie électronique mettent en oeuvre des moyens destinés à pallier de tels inconvénients, lesquels moyens ayant essentiellement pour fonction de placer la base de messages en une position centralisée conférant à son contenu une qualité de référence pour tout terminal qui sera amené à s'y connecter, chaque terminal téléchargeant alors le contenu de la base de messages en cours d'initialisation de connexion. Dans de tels services de messagerie, différents terminaux pourront donc encore présenter des contenus disparates, seul étant en principe acquis le fait que, à la suite d'une connexion à la base des messages au moyen d'un terminal donné, le contenu de cette base sera reproduit à l'utilisateur de manière fidèle par ledit terminal donné.

Pour que chacun des terminaux de l'utilisateur reproduise de manière relativement fidèle le contenu de la base des messages, un déclenchement automatique et périodique de téléchargements simultanés dudit contenu dans des moyens de mémorisation inclus dans chacun des terminaux a été envisagé dans l'état de la technique, mais de tels téléchargements indiscriminés de l'ensemble du contenu de la base génèrent un important volume de communication au travers d'un ou plusieurs réseaux limités en bande passante, pour parvenir à un résultat qui n'est en outre pas totalement satisfaisant car les diverses représentations du contenu de la base des messages offertes par les divers terminaux ne seront identiques entre elles qu'immédiatement après que de tels téléchargements simultanés auront été exécutés.

Le document de brevet publié sous le numéro GB2365260 décrit une méthode de transfert de messages d'un serveur de messagerie vers des terminaux dans laquelle, suite à la réception par le serveur de messagerie d'un message, celui-ci invite un terminal destinataire du message reçu à mettre à jour sa propre base de

Le document de brevet publié sous le numéro WO 2006/051232 décrit un service de messagerie dans un réseau pair à pair étant adapté à envoyer un avis de réception du message à destination d'un pair de destination de ce message. La présente invention offre une solution qui ne présente pas ces inconvénients en proposant un procédé selon les revendications 1 et 5, un système de communication selon la revendication 6 et un dispositif de communication selon la revendication 7. En effet, selon l'invention, dès que se sera produit un événement affectant un message contenu dans la base de messages, chaque dispositif de communication préalablement identifié comme devant en être averti recevra un message de notification lui permettant de mettre à jour sa propre base de messages.

Il n'est ainsi plus question de téléchargements indiscriminés et périodique de la totalité du contenu de la base de messages vers tous les terminaux d'un utilisateur, mais simplement de transmettre un message de signalisation ciblé vers les seuls dispositifs que l'utilisateur aura sélectionnés à cet effet au cours de l'étape de définition, message de signalisation dont le contenu sera directement lié à un message ayant subi une modification de contenu ou de statut, ce qui limite considérablement les transmissions de données surabondantes et inutilement consommatrices de bande passante.

Dans un mode de mise en oeuvre particulier de invention, un procédé conforme à la description qui précède inclut en outre une étape de signalisation, par au moins un dispositif inclus dans ledit ensemble, d'au moins un événement relatif à un message stocké simultanément dans ledit dispositif et dans la base de message.

Une telle étape de signalisation permet à un dispositif de provoquer une mise à jour de la base de messages qui est ainsi libérée de sa qualité de référence à l'origine dans l'état de la technique de nécessité de téléchargements systématiques. Le fait qu'un dispositif puisse signaler à la base de messages un événement dont ce dispositif est l'instigateur permettra ensuite, par simple transitivité, de notifier cet événement à tous les dispositifs préalablement sélectionnés au cours de l'étape de définition, afin de les inciter à opérer une mise à jour ciblée sur le message spécifiquement concerné par cet événement.

Selon une première variante de l'invention, l'étape de définition inclut une étape de sélection par un utilisateur d'au moins un dispositif de communication qui lui est propre et une étape de requête d'enregistrement de chaque dispositif sélectionné, auprès de moyens de gestion de la base de messages, en tant que destinataire de notifications d'évènements.

Selon cette première variante, l'utilisateur déclenchera lui-même une procédure d'enregistrement pour chaque dispositif qu'il aura sélectionné à cet effet, et aura ainsi une totale maîtrise de cette procédure, puisqu'il exercera au cours de son déroulement un contrôle physique sur le terminal considéré au moyen d'une interface homme-machine qui lui sera propre.

Selon une deuxième variante de l'invention, qui peut être mise en oeuvre alternativement ou cumulativement avec la première variante, l'étape de définition inclut une étape d'enregistrement, dans des moyens de gestion de la base de messages, d'une liste incluant au moins un identifiant d'un dispositif de communication, et une étape d'émission, depuis lesdits moyens de gestion vers chaque dispositif visé dans ladite liste, d'une incitation à transmettre en retour une requête d'enregistrement dudit dispositif en tant que destinataire de notifications d'évènements.

Une telle variante a pour intérêt de permettre un enregistrement automatique de tous les terminaux qui auront été sélectionnés à cet effet, puisque chacun de ces terminaux sollicitera son enregistrement dès qu'il y aura été incité par les moyens de gestion de la base de messages, sans autre intervention de l'utilisateur qu'une éventuelle contribution à la création de la liste des dispositifs sélectionnés.

Selon un premier aspect matériel, l'invention concerne aussi, en tant que produit obtenu par la mise en oeuvre d'un procédé conforme à la description qui précède, un signal émis par un dispositif de communication et porteur d'une requête d'enregistrement dudit dispositif en tant que destinataire de notifications d'événements relatifs à au moins un message stocké dans la base de messages.

Selon un deuxième aspect matériel, l'invention concerne aussi, en tant que moyen utile à sa mise en oeuvre, un programme d'ordinateur incluant au moins une série d'instructions de code de programme pour l'exécution d'au moins une étape de notification incluse dans un procédé conforme à la description qui précède lorsque ledit programme est exécuté sur un ordinateur.

Un tel programme d'ordinateur pourra être implanté non seulement dans les moyens de gestion de la base de message, mais également dans chacun des dispositifs sélectionnés au cours de l'étape de définition.

Selon un autre aspect matériel, l'invention concerne également un système de télécommunication incluant des moyens de stockage d'au moins un message dans une base de messages et des moyens de définition d'un ensemble incluant au moins un dispositif de communication, système incluant en outre des moyens de transmission, vers chaque dispositif inclus dans ledit ensemble, d'une notification d'au moins un événement relatif à un message stocké dans la base de messages.

Selon encore un autre aspect matériel, l'invention concerne également, en tant qu'autre moyen utile à sa mise en oeuvre, un dispositif de communication incluant des moyens de stockage d'au moins un message dans une base de messages et des moyens de transmission, vers au moins un dispositif inclus dans un ensemble prédéfini, d'une notification d'au moins un événement relatif audit message.

L'invention sera mieux comprise à l'aide de la description suivante, faite à titre d'exemple non-limitatif et en regard des dessins annexés, dans lesquels :
- la figure 1 est un schéma fonctionnel partiel décrivant une phase d'initialisation d'un système de télécommunication mettant en oeuvre l'invention,
- la figure 2 est un autre schéma fonctionnel partiel décrivant un mode de fonctionnement possible dudit système de télécommunication.

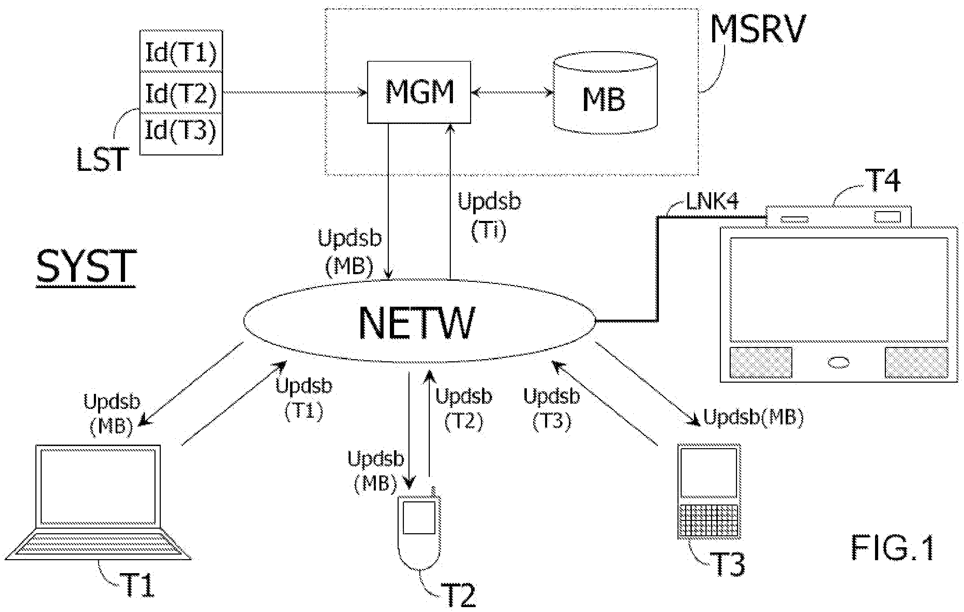

La Fig.1 représente schématiquement un système de télécommunication SYST dans lequel la présente invention est mise en oeuvre. Dans ce mode de réalisation particulier, le système SYST comporte un serveur de messagerie MSRV, qui inclut une base de messages MB et des moyens de gestion MGM de ladite base.

Ce serveur de messagerie MSRV est apte à communiquer avec au moins un réseau de communication NETW, par exemple un réseau maillé conforme à un protocole de type Internet, éventuellement *via* un réseau d'accès filaire de type optique ou téléphonique commuté, ou encore *via* un réseau sans-fil, par exemple conforme à une norme dite "Wi-F" IEEE 802.11.

Dans le mode de mise en oeuvre de l'invention décrit ici, le système SYST inclut des premier, deuxième, troisième et quatrième terminaux T1, T2, T3 et T4 appartenant tous à un même utilisateur et respectivement matérialisés dans cet exemple par un ordinateur personnel, un téléphone mobile, un assistant numérique personnel et un boîtier-décodeur pour poste de télévision. Ces terminaux sont également reliés au réseau de communication NETW, et sont donc aptes à interagir avec le serveur de messagerie MSERV.

Il doit être bien entendu que si, dans un souci de simplification visant à faciliter une compréhension aisée de l'invention, une seule pluralité de terminaux appartenant à un seul utilisateur est représentée sur la présente figure, la base de messages MB incluse dans le serveur de messagerie MSRV sera en principe fractionnée de manière à être apte à héberger diverses bases individuelles dédiées à autant d'utilisateurs, chacun desquels possédant sa propre pluralité de terminaux et bénéficiant ainsi grâce à l'invention d'une pluralité de moyens d'accès mutuellement cohérents à sa propre base de messages.

Dans le mode de mise en oeuvre de l'invention décrit ici, un ensemble de terminaux sélectionnés parmi la pluralité de terminaux T1, T2, T3 et T4 est créé au cours d'une étape dite de définition. Dans le présent exemple, le quatrième terminal T4 n'est pas inclus dans cet ensemble, bien qu'il soit relié au réseau de communication NETW par une liaison de communication LNK4. L'ensemble des terminaux sélectionnés au cours de l'étape de définition n'inclut ainsi que les premier, deuxième et troisième terminaux T1, T2 et T3. Cette définition de l'ensemble (T1,T2,T3) peut être opérée de diverses manières :
Selon une première variante de mise en oeuvre, l'étape de définition pourra inclure une étape de sélection des terminaux T1, T2 et T3 opérée par l'utilisateur lui-même, et une étape de requête d'enregistrement de chaque terminal sélectionné, auprès des moyens de gestion MGM de la base de messages MB, en tant que destinataire de notifications d'événements. Ainsi, les terminaux T1, T2 et T3 émettront respectivement des signaux Updsb(T1), Updsb(T2) et Updsb(T3) porteurs de telles requêtes, qui seront reçus par les moyens de gestion MGM *via* le réseau de communication NETW sous la forme de signaux Updsb(Ti).

Les moyens de gestion MGM connaissant alors les diverses identités des terminaux appartenant à l'ensemble (T1,T2,T3) des terminaux sélectionnés, ces moyens de gestion pourront envoyer en retour à chacun de ces terminaux un signal Updsb(MB) porteur d'une requête d'enregistrement de la base de messagerie MB en tant que destinataire de notifications d'évènements.

Selon une deuxième variante de mise en oeuvre, l'étape de définition pourra inclure une étape d'enregistrement, dans des moyens de gestion de la base de messages MGM, d'une liste LST incluant les identifiants Id(T1), Id(R2) et Id(T3) des terminaux appartenant à l'ensemble (T1,T2,T3) des terminaux sélectionnés, et une étape d'émission, depuis lesdits moyens de gestion MGM vers chaque terminal Ti (pour i= à 3) visé dans ladite liste LST, d'une incitation à transmettre en retour une requête d'enregistrement Updsb(Ti) dudit terminal en tant que destinataire de notifications d'évènements.

Une telle incitation pourra être matérialisée par un signal Updsb(MB) porteur d'une requête d'enregistrement de la base de messagerie MB en tant que destinataire de notifications d'événements, en réponse à laquelle les terminaux se manifesteront auprès des moyens de gestion MGM, selon une forme réciproque du mode de fonctionnement décrit dans le cadre de la première variante et en conformité avec le mode de mise en oeuvre représenté dans la présente figure.

L'incitation évoquée ci-dessus pourra alternativement prendre la forme d'une émission par les moyens de gestion MGM vers chaque terminal Ti (pour i= 1 à 3) visé dans ladite liste LST d'un message spécifique non-représenté ici, par exemple un message de type "REFER" tel que prévu dans un protocole de communication de création de sessions de type SI P (abréviation bien connue de l'homme du métier de l'expression anglaise "Session Initiation Protocol"), en réponse auquel le signal Updsb(Ti) émis par chaque terminal Ti (pour i= à 3) sera porteur d'un message de type "SUBSCRIBE".

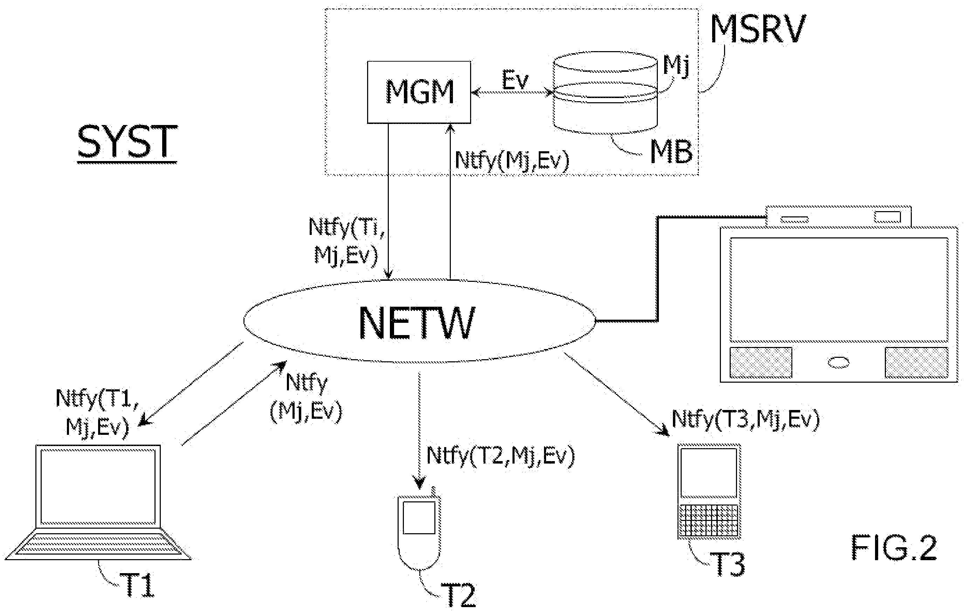

La Fig.2 représente un processus de transmission de messages de notification conforme à un mode de mise en oeuvre particulier de l'invention au sein du système de télécommunication SYST précédemment décrit. Après exécution d'une étape de stockage au cours de laquelle le serveur de messagerie MSRV a mémorisé un nouveau message Mj dans la base de messages MB, les moyens de gestion MGM exécutent une étape de transmission à chaque terminal Ti (pour i=1 à 3) appartenant à l'ensemble (T1,T2,T3) des terminaux sélectionnés d'un signal de notification Ntfy(Ti,Mj,Ev) d'un événement Ev relatif au message Mj, lequel événement consiste en cette occurrence tout simplement en son arrivée et son stockage au sein de la base des messages. Ce message Mj apparaîtra avec un attribut représentatif d'un état "non-lu" pour un utilisateur accédant à sa base de messagerie *via* l'un des terminaux Ti (pour i=1 à 3), lequel attribut pouvant par exemple être matérialisé par un affichage en caractère gras d'un descriptif du message Mj.

Lorsque l'utilisateur consultera ce message au moyen du premier terminal T1, et aura ainsi fait passer son attribut d'état de "non-lu" à "lu", le premier terminal transmettra un signal de notification Ntfy(Mj,Ev) de ce nouvel événement Ev relatif au message Mj en direction des moyens de gestion MGM de la base de messages MB qui pourra ainsi être mise à jour, en suite de quoi le nouvel événement matérialisé par le passage de "non-lu" à "lu" de l'attribut d'état du message Mj sera notifié par les moyens de gestion MGM aux terminaux appartenant à l'ensemble (T1,T2,T3) au cours d'une étape de transmission de signaux de notification Ntfy(Ti,Mj,Ev). Dans certains modes de mise en oeuvre, le terminal instigateur de l'événement Ev faisant l'objet de la notification, en la présente espèce le premier terminal T1, pourra être exclu de la liste des destinataires des signaux de notification Ntfy(Ti,Mj,Ev) transmis par les moyens de gestion MGM, alors que, dans certains autres modes de mise en oeuvre, ce terminal instigateur pourra être lui aussi destinataire d'une notification qui viendra ainsi faire office d'accusé de réception du signal de notification Ntfy(Mj,Ev) qu'il aura initialement émis.

Les transmissions des signaux de notification décrits ci-dessus seront avantageusement pilotés par des programmes d'ordinateur incluant au moins une série d'instructions de code de programme déclenchant l'exécution d'une étape de notification lorsque ledit programme est exécuté sur une unité de calcul. Un tel programme d'ordinateur pourra alors être implanté non seulement dans les moyens de gestion MGM de la base de messages, mais également dans chacun des terminaux T1,T2 et T3 sélectionnés au cours de l'étape de définition.

Grâce à l'invention dont un mode de réalisation particulier a été décrit ci-dessus, dès que se produira un événement Ev affectant un message Mj contenu dans la base de messages MB, chaque dispositif de communication préalablement identifié comme devant en être averti, qu'il s'agisse d'un terminal Ti (pour i=1 à 3) ou du serveur de messagerie MSRV, recevra un message de notification lui permettant de mettre à jour sa propre base de messages.

L'invention offre donc une pluralité de moyens d'accès mutuellement cohérents à une base de messages en ne mettant pour autant en oeuvre que des transmissions ciblées de messages de signalisation dont les contenus sont directement liés à des messages ayant subi une modification de contenu ou de statut, ce qui limite considérablement les transmissions de données surabondantes et inutilement consommatrices de bande passante.

## Revendications

1. Procédé de télécommunication destiné à être mis en ouvre par un système de communication, le procédé comprenant
- une étape de stockage d'au moins un message dans une base (MB) de messages,
- une étape de définition d'un ensemble incluant au moins deux dispositifs (T1, T2, T3) de communication,
- une étape de réception d'une requête d'enregistrement de chaque dispositif, auprès de moyens de gestion de la base de messages, en tant que destinataire de notifications d'événements,
- une étape d'envoi vers lesdites au moins deux dispositifs (T1, T2, T3) d'une requête d'enregistrement de la base de messagerie en tant que destinataire de notifications d'évènements,
- une étape de réception, en provenance d'un premier dispositif, d'une notification (Ntfy(T1,Mj,Ev)) signalant au moins un événement dont un premier dispositif dudit ensemble est l'instigateur et relatif à un message stocké simultanément dans ledit premier dispositif et dans la base de message,
- une étape de transmission d'une notification (Ntfy(Mj,Ev)) dudit événement vers chaque dispositif inclus dans ledit ensemble qui est distinct dudit premier dispositif.

2. Procédé selon la revendication 1, **caractérisé en ce que** l'étape de définition inclut une étape d'enregistrement, dans des moyens de gestion de la base de messages, d'une liste incluant au moins un identifiant d'un dispositif de communication, et une étape d'émission, depuis lesdits moyens de gestion vers chaque dispositif visé dans ladite liste, d'une incitation à transmettre en retour une requête d'enregistrement dudit dispositif en tant que destinataire de notifications d'évènements.

3. Procédé selon la revendication 1, dans lequel ledit événement concerne une modification de contenu ou de statut du message (Mj).

4. Procédé selon la revendication 1, dans lequel ledit événement concerne un passage d'attribut d'état du message (Mj) de "non-lu" à "lu".

5. Procédé de télécommunication destiné à être mis en oeuvre par un dispositif de communication faisant partie d'un ensemble de dispositifs de communication défini auprès d'un système de télécommunication incluant des moyens de stockage d'au moins un message dans une base de messages, le procédé comprenant
- une étape de transmission vers ledit système de télécommunication, d'une requête d'enregistrement dudit dispositif en tant que destinataire d'une notification d'évènements,
- une étape de réception d'une requête d'enregistrement de la base de messagerie en tant que destinataire de notifications d'évènements,
- une étape d'envoi d'une notification (Ntfy(T1,Mj,Ev)) signalant au moins un événement dont ledit dispositif est l'instigateur et relatif à un message stocké simultanément dans ledit dispositif et dans la base de message,
- une étape de réception d'une notification (Ntfy(Mj,Ev)) signalant au moins un événement dont un autre dispositif est l'instigateur et relatif à un message (Mj) stocké simultanément dans cet autre dispositif et dans la base de messages.

6. Système (MSRV) de télécommunication incluant
- des moyens de stockage d'au moins un message dans une base (MB) de messages et
- des moyens de définition d'un ensemble incluant au moins deux dispositifs (T1, T2, T3) de communication,
- des moyens de réception d'une requête d'enregistrement de chaque dispositif, auprès de moyens de gestion de la base de messages, en tant que destinataire de notifications d'événements,
- des moyens d'envoi vers lesdites au moins deux dispositifs (T1, T2, T3) d'une requête d'enregistrement de la base de messagerie en tant que destinataire de notifications d'évènements,
- des moyens de réception, en provenance d'un premier dispositif, d'une notification (Ntfy(T1,Mj,Ev)) signalant au moins un événement relatif à un message stocké simultanément dans ledit dispositif et dans la base de message,
- des moyens de transmission d'une notification (Ntfy(Mj,Ev)) dudit événement (Ev) vers chaque dispositif inclus dans ledit ensemble qui est distinct dudit premier dispositif.

7. Dispositif de communication faisant partie d'un ensemble de dispositifs de communication défini auprès d'un système de télécommunication incluant des moyens de stockage d'au moins un message dans une base de messages,
le dispositif de communication incluant
- des moyens de transmission, vers ledit système de télécommunication, d'une requête d'enregistrement dudit dispositif en tant que destinataire d'une notification d'évènements,
- des moyens de réception d'une requête d'enregistrement de la base de messagerie en tant que destinataire de notifications d'évènements,
- des moyens d'envoi d'une notification (Ntfy(T1,Mj,Ev)) signalant au moins un événement dont ledit dispositif est l'instigateur et relatif à un message stocké simultanément dans ledit dispositif et dans la base de message,
- des moyens de réception d'une d'une notification (Ntfy(Mj,Ev)) signalant au moins un événement dont un autre dispositif est l'instigateur et relatif à un message (Mj) stocké simultanément dans cet autre dispositif et dans la base de messages.

8. Programme d'ordinateur incluant au moins une série d'instructions de code de programme pour l'exécution des étapes d'un procédé conforme à l'une des revendications 1 à 5 lorsque ledit programme est exécuté sur un ordinateur.

## Patentansprüche

1. Telekommunikationsverfahren, das dazu bestimmt ist, von einem Kommunikationssystem umgesetzt zu werden, wobei das Verfahren Folgendes umfasst:
- einen Schritt des Speicherns mindestens einer Nachricht in einer Nachrichtenbank (MB),
- einen Schritt des Definierens einer Einheit, die mindestens zwei Kommunikationsvorrichtungen (T1, T2, T3) aufweist,
- einen Schritt des Empfangens einer Anfrage um Registrierung jeder Vorrichtung als Empfänger von Bekanntgaben von Ereignissen bei Verwaltungsmitteln der Nachrichtenbank,
- einen Schritt des Sendens zu den mindestens zwei Vorrichtungen (T1, T2, T3) einer Anfrage um Registrierung der Nachrichtenbank als Empfänger von Bekanntgaben von Ereignissen,
- einen Schritt des Empfangens von einer ersten Vorrichtung kommend einer Bekanntgabe (Ntfy(T1,Mj,Ev), die mindestens ein Ereignis meldet, dessen Urheber eine erste Vorrichtung der Einheit ist, und in Zusammenhang mit einer Nachricht, die gleichzeitig in der ersten Vorrichtung und in der Nachrichtenbank gespeichert ist,
- einen Schritt des Übertragens einer Bekanntgabe (Ntfy(Mj,Ev)) des Ereignisses zu jeder Vorrichtung, die in der Einheit enthalten ist, die von der ersten Vorrichtung verschieden ist.

2. Verfahren nach Anspruch 1, **dadurch gekennzeichnet, dass** der Definitionsschritt einen Schritt der Registrierung in Mitteln zum Verwalten der Nachrichtenbank einer Liste, die mindestens einen Identifikator einer Kommunikationsvorrichtung aufweist, und einen Sendeschritt von den Verwaltungsmitteln einer Anregung zum rückwendenden Übertragen einer Anfrage um Registrierung der Vorrichtung als Ereignisbekanntgabeempfänger zu jeder Zielvorrichtung in der Liste aufweist.

3. Verfahren nach Anspruch 1, wobei das Ereignis eine Änderung des Inhalts oder des Zustands der Nachricht (Mj) betrifft.

4. Verfahren nach Anspruch 1, wobei das Ereignis einen Übergang eines Zustandsattributs der Nachricht (Mj) von "nicht gelesen" auf "gelesen" betrifft.

5. Telekommunikationsverfahren, das dazu bestimmt ist von einer Kommunikationsvorrichtung umgesetzt zu werden, die Teil einer Einheit von Kommunikationsvorrichtungen ist, die bei einem Telekommunikationssystem definiert ist, das Mittel zum Speichern mindestens einer Nachricht in einer Nachrichtenbank aufweist, wobei das Verfahren Folgendes umfasst:
- einen Schritt des Übertragens zu dem Telekommunikationssystem einer Anfrage um Registrierung der Vorrichtung als Empfänger einer Bekanntgabe von Ereignissen,
- einen Schritt des Empfangens einer Anfrage um Registrierung der Nachrichtenbank als Empfänger von Bekanntgaben von Ereignissen,
- einen Schritt des Sendens einer Bekanntgabe (Ntfy(T1,Mj,Ev), die mindestens ein Ereignis meldet, dessen Urheber die Vorrichtung ist, und in Zusammenhang mit einer Nachricht, die gleichzeitig in der Vorrichtung und in der Nachrichtenbank gespeichert ist,
- einen Schritt des Empfangens einer Bekanntgabe (Ntfy(Mj,Ev)), die mindestens ein Ereignis meldet, dessen Urheber eine andere Vorrichtung ist, und in Zusammenhang mit einer Nachricht (Mj), die gleichzeitig in dieser anderen Vorrichtung und in der Nachrichtenbank gespeichert ist.

6. Telekommunikationssystem (MSRV), die Folgendes aufweist
- Mittel zum Speichern mindestens einer Nachricht in einer Nachrichtenbank (MB) und
- Mittel zum Definieren einer Einheit, die mindestens zwei Kommunikationsvorrichtungen (T1, T2, T3) aufweist,
- Mittel zum Empfangen einer Anfrage um Registrierung jeder Vorrichtung bei Verwaltungsmitteln der Nachrichtenbank als Empfänger von Bekanntgaben von Ereignissen,
- Mittel zum Senden zu den mindestens zwei Vorrichtungen (T1, T2, T3) einer Anfrage um Registrierung der Nachrichtenbank als Empfänger von Bekanntgaben von Ereignissen,
- Mittel zum Empfangen von einer ersten Vorrichtung kommend einer Bekanntgabe (Ntfy(T1,Mj,Ev), die mindestens ein Ereignis in Zusammenhang mit einer Nachricht, die gleichzeitig in der Vorrichtung und in der Nachrichtenbank gespeichert ist, meldet,
- Mittel zum Übertragen einer Bekanntgabe (Ntfy(Mj,Ev)) des Ereignisses (Ev) zu jeder Vorrichtung, die in der Einheit, die von der ersten Vorrichtung verschieden ist, enthalten ist.

7. Kommunikationsvorrichtung, die Teil einer Einheit von Kommunikationsvorrichtungen ist, die bei einem Telekommunikationssystem definiert ist, das Mittel zum Speichern mindestens einer Nachricht in einer Nachrichtenbank aufweist,
wobei die Kommunikationsvorrichtung Folgendes aufweist
- Mittel zum Übertragen zu dem Telekommunikationssystem einer Anfrage um Registrierung der Vorrichtung als Empfänger einer Bekanntgabe von Ereignissen,
- Mittel zum Empfangen einer Anfrage um Registrierung der Nachrichtenbank als Empfänger von Bekanntgaben von Ereignissen,
- Mittel zum Senden einer Bekanntgabe (Ntfy(T1,Mj,Ev), die mindestens ein Ereignis meldet, dessen Urheber die Vorrichtung ist, und in Zusammenhang mit einer Nachricht, die gleichzeitig in der Vorrichtung und in der Nachrichtenbank gespeichert ist,
- Mittel zum Empfangen einer Bekanntgabe (Ntfy(Mj,Ev)), die mindestens ein Ereignis meldet, dessen Urheber eine andere Vorrichtung ist, und in Zusammenhang mit einer Nachricht (Mj), die gleichzeitig in dieser anderen Vorrichtung und in der Nachrichtenbank gespeichert ist.

8. Computerprogramm, das mindestens eine Reihe von Programmcodeanweisungen für die Ausführung der Schritte eines Verfahrens nach einem der Ansprüche 1 bis 5 aufweist, wenn das Programm auf einem Computer ausgeführt wird.

## Claims

1. Telecommunication method intended to be implemented by a communication system, the method comprising
- a step of storing at least one message in a message base (MB),
- a step of defining a set including at least two communication devices (T1, T2, T3),
- a step of receiving a request for registration of each device, with means of management of the message base, as recipient of events notifications,
- a step of sending to said at least two devices (T1, T2, T3) a request for registration of the messaging base as recipient of events notifications,
- a step of receiving, from a first device, a notification (Ntfy(T1, Mj, Ev)) signalling at least one event of which a first device of said set is the instigator and relating to a message stored simultaneously in said first device and in the message base,
- a step of transmitting a notification (Ntfy(Mj, Ev)) of said event to each device included in said set which is distinct from said first device.

2. Method according to Claim 1, **characterized in that** the defining step includes a step of registering, in means of management of the message base, a list including at least one identifier of a communication device, and a step of sending, from said management means to each device envisaged in said list, a prompt to transmit in return a request for registration of said device as recipient of events notifications.

3. Method according to Claim 1, in which said event relates to a modification of content or of status of the message (Mj).

4. Method according to Claim 1, in which said event relates to a switch of state attribute of the message (Mj) from "unread" to "read".

5. Telecommunication method intended to be implemented by a communication system forming part of a set of communication devices which is defined at a telecommunication system including means for storing at least one message in a message base, the method comprising
- a step of transmitting to said telecommunication system, a request for registration of said device as recipient of an events notification,
- a step of receiving a request for registration of the messaging base as recipient of events notifications,
- a step of sending a notification (Ntfy(T1, Mj, Ev)) signalling at least one event of which said device is the instigator and relating to a message stored simultaneously in said device and in the message base,
- a step of receiving a notification (Ntfy(Mj, Ev)) signalling at least one event of which another device is the instigator and relating to a message (Mj) stored simultaneously in this other device and in the message base.

6. Telecommunication system (MSRV) including
- means for storing at least one message in a message base (MB) and
- means for defining a set including at least two communication devices (T1, T2, T3),
- means for receiving a request for registration of each device, with means of management of the message base, as recipient of events notifications,
- means for sending to said at least two devices (T1, T2, T3) a request for registration of the messaging base as recipient of events notifications,
- means for receiving, from a first device, a notification (Ntfy(T1, Mj, Ev)) signalling at least one event relating to a message stored simultaneously in said device and in the message base,
- means for transmitting a notification (Ntfy(Mj, Ev)) of said event (Ev) to each device included in said set which is distinct from said first device.

7. Communication device forming part of a set of communication devices which is defined at a telecommunication system including means for storing at least one message in a message base,
the communication device including
- means for transmitting, to said telecommunication system, a request for registration of said device as recipient of an events notification,
- means for receiving a request for registration of the messaging base as recipient of events notifications,
- means for sending a notification (Ntfy(T1, Mj, Ev)) signalling at least one event of which said device is the instigator and relating to a message stored simultaneously in said device and in the message base,
- means for receiving a notification (Ntfy(Mj, Ev)) signalling at least one event of which another device is the instigator and relating to a message (Mj) stored simultaneously in this other device and in the message base.

8. Computer program including at least one series of program code instructions for the execution of the steps of a method in accordance with one of Claims 1 to 5 when said program is executed on a computer.
